(19) Europäisches Patentamt

European Patent Office

Office européen des brevets

(11) **EP 1 825 490 B1**

(12) **FASCICULE DE BREVET EUROPEEN**

(45) Date de publication et mention
de la délivrance du brevet:
**21.01.2015 Bulletin 2015/04**

(21) Numéro de dépôt: **05817517.5**

(22) Date de dépôt: **12.12.2005**

(51) Int Cl.:
*H01J 1/34* (2006.01)     *H01J 1/304* (2006.01)
*H01J 23/04* (2006.01)

(86) Numéro de dépôt international:
**PCT/EP2005/056701**

(87) Numéro de publication internationale:
**WO 2006/063982 (22.06.2006 Gazette 2006/25)**

(54) **CATHODE À ÉMISSION DE CHAMP À COMMANDE OPTIQUE**

OPTISCH GESTEUERTE FELDEMISSIONSKATHODE

OPTICALLY CONTROLLED FIELD EMISSION CATHODE

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **15.12.2004 FR 0413340**

(43) Date de publication de la demande:
**29.08.2007 Bulletin 2007/35**

(73) Titulaire: **THALES
92200 Neuilly sur Seine (FR)**

(72) Inventeurs:
• **LEGAGNEUX, Pierre
F-78320 LE MESNIL SAINT DENIS (FR)**
• **GANGLOFF, Laurent
F-91190 GIF SUR YVETTE (FR)**
• **MINOUX, Eric
75016 Paris (FR)**
• **SCHNELL, Jean-Philippe
F-75007 PARIS (FR)**
• **ANDRE, Frédéric
F-92140 CLAMART (FR)**
• **DIEUMEGARD, Dominique
F-78750 MAREIL-MARLY (FR)**

(74) Mandataire: **Esselin, Sophie et al
Marks & Clerk France
Conseils en Propriété Industrielle
Immeuble Visium
22, Avenue Aristide Briand
94117 Arcueil Cedex (FR)**

(56) Documents cités:
**US-A- 3 814 968       US-A- 5 804 833
US-A1- 2003 222 579**

• **SAWADA K ET AL: "PHOTOSENSITIVE FIELD
EMITTERS INCLUDING A-SI:H P-I-N
PHOTODETECTIONREGION" IEEE
TRANSACTIONS ON ELECTRON DEVICES, IEEE
SERVICE CENTER, PISACATAWAY, NJ, US, vol.
45, no. 1, 1998, pages 321-325, XP000787883
ISSN: 0018-9383**
• **PATENT ABSTRACTS OF JAPAN vol. 2000, no.
14, 5 mars 2001 (2001-03-05) -& JP 2000 306497
A (HITACHI LTD; HITACHI DEVICE ENG CO LTD),
2 novembre 2000 (2000-11-02)**
• **SCHRODER D K ET AL: "THE SEMICONDUCTOR
FIELD-EMISSION PHOTOCATHODE" IEEE
TRANSACTIONS ON ELECTRON DEVICES, IEEE
SERVICE CENTER, PISACATAWAY, NJ, US, vol.
21, no. 12, décembre 1974 (1974-12), pages
785-798, XP000960813 ISSN: 0018-9383**

# Description

Le domaine d'application est celui des cathodes à émission de champ pouvant être utilisées dans des tubes à vide notamment pour l'amplification hyperfréquence, en vue par exemple d'applications aux télécommunications. Sont particulièrement concernés les tubes à modulation directe de l'émission, comme les triodes ou les tubes à sortie inductive.

Actuellement, les sources d'électrons des tubes amplificateurs hyperfréquences sont thermo-ioniques. Mais des sources fonctionnant sur le principe des émissions de champ (cathodes froides) sont étudiées pour leurs meilleures performances potentielles (modulation de l'émission à plus haute fréquence, mise en fonctionnement immédiate de la cathode sans délai de chauffage, compacité des tubes ...). Ces cathodes sont pour la plupart constituées d'une surface plane conductrice munie de structures en relief, également conductrices et sur lesquelles se concentre le champ électrique. Ces structures en relief sont des émetteurs d'électrons lorsque le champ au sommet est suffisamment élevé. Ces cathodes sont ainsi à commande purement électrique : dans les triodes, par exemple, qui comportent trois électrodes successives : la cathode, la grille et l'anode, on module la tension électrique appliquée entre la cathode et la grille, pour moduler le courant d'électrons émis par émission de champ à partir de la cathode.

Plusieurs limitations résultent de cette commande électrique de l'émission :

1/ La surface de la cathode doit être réduite à des dimensions nettement inférieures à la longueur d'onde du signal hyperfréquence, pour que tous les points de la surface de la cathode émettent en phase, et qu'ainsi la profondeur de modulation du courant total émis ne soit pas atténuée. Mais plus la surface est réduite, plus le courant émis est faible et plus la puissance de sortie est limitée.

2/ Par ailleurs, la nécessité de polariser la cathode à une haute tension négative par rapport à la grille d'extraction, impose de réaliser une isolation galvanique entre la cathode et le conducteur extérieur du guide coaxial d'entrée qui est à la masse. Cette isolation galvanique peut limiter les performances à haute puissance.

3/ D'autre part, dans la technologie des tubes hyperfréquences, l'onde hyperfréquence est couplée à la cavité d'entrée du tube par un connecteur qu'il est difficile de miniaturiser. C'est une limitation à la miniaturisation de toute la cavité, et par suite, une limitation au fonctionnement optimal

4/ Egalement, la bande passante (particulièrement la fréquence maximale de fonctionnement de la cathode) est limitée du fait que le signal d'entrée est appliqué sur une impédance d'entrée présentant une composante capacitive importante.

Pour résoudre ces différents problèmes l'invention propose de remplacer la commande électrique de modulation par une commande optique.

La présente invention propose ainsi une cathode associant de manière générique au moins un émetteur d'électrons par émission de champ avec un élément (dispositif ou matériau) photoélectrique (dont les propriétés électriques peuvent être modifiées par la lumière), notamment un élément photoconducteur (dont les propriétés de conduction électrique peuvent être modifiées par la lumière), de sorte que l'on puisse commander par son intermédiaire, l'émission des électrons à l'aide d'une source optique.

Plus précisément l'invention a pour objet une cathode à émission de champ à commande optique selon la revendication 1.

Avantageusement le ou les éléments émetteurs, le ou les éléments photoconducteurs et la ou les surfaces conductrices du substrat sont empilés dans cet ordre dans une structure intégrée sur le substrat.

Selon une variante de l'invention, les émetteurs peuvent être de forme sensiblement conique ou pyramidale de base inférieure ou égale à la hauteur, en semiconducteur ou en métal.

Avantageusement, les émetteurs peuvent être de type nanofils ou nanofibres ou nanotubes de hauteur plus grande que le diamètre, en carbone ou en nitrure de bore ou en métal.

Selon une variante de l'invention, l'élément photoconducteur peut être une photorésistance, pouvant fonctionner également en photosource de courant

Selon une variante de l'invention, l'élément photoconducteur peut être une photodiode est de type PIN, P étant représentatif d'une couche de matériau semiconducteur dopée p+, I étant représentatif d'une couche de matériau semiconducteur peu ou peu dopé, N étant représentatif d'une couche de matériau semiconducteur dopé n+, ou de type MIN, M étant représentatif d'une couche à conduction métallique, les couches P ou M se trouvant en contact électrique avec une surface conductrice du substrat de sorte que la photodiode se trouve polarisée en inverse lors de l'utilisation normale de la cathode.

Le support peut être muni de surfaces conductrices en métal ou conducteur transparent ou semiconducteur très dopé ou être lui-même entièrement constitué de ces matériaux.

Selon une variante avantageuse, l'élément photoconducteur peut être un matériau semiconducteur I peu ou pas dopé dans sa partie centrale, et muni à ses extrémités de forts dopages N ou P (et éventuellement d'une couche métallique à son extrémité supérieure) de façon à assurer un bon contact ohmique avec les conducteurs auxquels il est connecté comme cela est connu dans l'état de l'art, et fonctionner comme il sera explicité ultérieurement en régime de mobilité de porteurs, correspondant à une résistance commandée optiquement,

Selon une variante, l'élément photoconducteur peut également être un arrangement semblable au précédent avec des dimensions lui permettant de fonctionner en régime de saturation de vitesse de porteurs et donc correspondant à une source de courant commandée optiquement.

Selon une autre variante, l'élément photoconducteur peut être de type diode PIN, MIN ou MIP se trouvant polarisée en inverse lors du fonctionnement de la cathode et fonctionnant ainsi en photodiode comme cela est connu (ici M désigne un métal, un composé d'oxydes conducteurs...).

Selon une variante avantageuse, la couche conductrice supérieure de l'élément photoconducteur est latéralement délimitée pour individualiser des zones photoconductrices et en associer une à chaque groupe d'émetteurs.

Selon une variante avantageuse, chaque zone photoconductrice n'est associée qu'à un émetteur.

Selon l'invention, les couches conductrices supérieures du photoconducteur ont des dimensions latérales comprises entre le diamètre et la hauteur de chaque émetteur de manière à ce que des variations d'éclairement du photoconducteur modifient efficacement la configuration du champ électrique à proximité, et donc le courant émis par l'émetteur ainsi que cela est expliqué plus loin.

Selon une variante des trois précédentes, la couche de matériau photoconducteur peut également être latéralement délimitée sur tout ou partie de son épaisseur.

De manière générale, la modulation de la concentration des porteurs doit suivre le signal optique jusqu'à la fréquence maximale visée. La disparition des porteurs dans les photoconducteurs lorsqu'ils sont munis de contacts ohmiques injectants (NIN, PIP, PIN en direct...) se fait par recombinaison.

Pour limiter la durée de vie des porteurs, il est avantageusement possible d'utiliser notamment les matériaux et configurations suivantes :

- Germanium ou Silicium ou alliages des deux, à forte concentration de défauts structurels réalisés par irradiation par électrons de hautes énergies ($10^{-10}$s).
- Silicium implanté avec de l'or.
- -GaAs « basse température » ( durée de vie des porteurs : $10^{-12}$s),
- autres III-V ou alliages III-V « basses températures ».
- Semiconducteurs poly, micro ou nanocristallins (durée de vie des porteurs : $10^{-9}$s à $10^{-10}$s).
- Géométries favorisant la recombinaison des porteurs en surface (dimensions plus petites que la longueur de diffusion des porteurs).

Par matériaux III-V basses températures on entend comme cela est connu, des matériaux dont la croissance est réalisée à une température inhabituellement basse de sorte que se produise en leur sein un excès d'élément V qui ségrégeant constituent des zones de recombinaisons particulièrement efficaces.

L'invention a aussi pour objet un tube amplificateur à commande optique comportant une anode et une cathode, ladite cathode selon la revendication 1.

Selon une variante de l'invention, le tube amplificateur peut avantageusement comprendre une grille intermédiaire, outre l'anode et la cathode. Selon une autre variante, le tube amplificateur peut, outre la cathode selon l'invention, comprendre une grille et une hélice en sortie d'émission d'électrons après la grille. Le rôle de l'hélice est de réaliser le transfert de l'énergie des paquets d'électrons émis vers l'onde de champ électromagnétique qui s'y crée, comme cela est connu dans les tubes à ondes progressives.

L'invention sera mieux comprise et d'autres avantages apparaîtront à la lecture de la description qui va suivre donnée à titre non limitatif et grâce aux figures annexées parmi lesquelles :

- La figure 1 schématise le principe de fonctionnement d'un émetteur d'électrons.
- La figure 2 schématise une cathode à effet de champ selon l'art connu, comportant un émetteur.
- La figure 3a schématise une cathode comportant un émetteur par émission de champ, placé à proximité d'un substrat conducteur auquel l'émetteur est électriquement relié par l'intermédiaire d'un élément photoconducteur.
- La figure 3b schématise une réalisation par empilement vertical des mêmes éléments, avec une connexion électrique en face avant de la cathode.
- La figure 3c schématise une version dans laquelle le dispositif photoconducteur comporte une couche conductrice à sa face supérieure. Le contrôle de l'extension latérale de cette couche conductrice est particulièrement important.
- Les figures 4a et 4b illustrent une cathode comportant un émetteur sur un substrat muni d'une surface conductrice de dimensions très supérieures à la hauteur de l'émetteur, et les surfaces équipotentielles lorsque l'ensemble est face à une anode positive.
- La figure 5a illustre une cathode comportant un émetteur sur une résistance (munie à sa face supérieure d'une couche conductrice) elle-même sur la surface conductrice d'un substrat, la résistance et sa couche conductrice supérieure ayant une surface de l'ordre de grandeur de la hauteur de l'émetteur, et la figure 5b illustre les surfaces équipotentielles lorsque l'ensemble est face à une anode positive.
- La figure 6a illustre une première variante de l'invention dont l'élément photoconducteur (muni de sa couche conductrice supérieure) est monté sur un substrat transparent dont la surface est recouverte d'un conducteur transparent. Cela permet un éclairement de la cathode en face arrière.
- La figure 6b illustre dans une variante identique à celle illustrée en figure 6a, le cas où l'élément photoconducteur contient une couche surdopée à chacune de ses extrémités pour fonctionner en photorésistance.

- La figure 7 illustre une seconde variante de l'invention dans laquelle le substrat est lui-même transparent et conducteur, par exemple un semiconducteur très dopé, muni d'une électrode de contact à sa face inférieure.
- La figure 8 illustre l'évolution de la vitesse des porteurs de charges en fonction du champ électrique appliqué dans différents matériaux semiconducteurs.
- La figure 9 illustre une troisième variante de l'invention comprenant une première structure de photodiode polarisée en inverse et montée en série avec l'émetteur.
- La figure 10 illustre une quatrième variante de l'invention comprenant une seconde structure de photodiode polarisée en inverse et montée en série avec l'émetteur.
- La figure 11 illustre une cinquième variante de l'invention comprenant une troisième structure de photodiode polarisée en inverse et montée en série avec l'émetteur.
- La figure 12 illustre une sixième variante de l'invention comprenant une quatrième structure de photodiode polarisée en inverse et montée en série avec l'émetteur.
- La figure 13 illustre une septième variante de l'invention comprenant une photorésistance montée en série avec un émetteur comportant un élément de contact localisé au niveau de l'émetteur lui-même.
- La figure 14 illustre une variante de l'invention comportant une structure en mésa au niveau de la photorésistance montée en série avec l'émetteur.
- La figure 15 Illustre un premier exemple de tube amplificateur utilisant un émetteur.
- La figure 16 illustre un second exemple de tube amplificateur utilisant un émetteur.
- La figure 17 illustre une structure d'amplificateur à commande optique.

La description qui va suivre est donnée dans le cas avantageux d'un émetteur associé à un dispositif saturateur de courant. Néanmoins, l'invention peut tout à fait être appliquée à des variantes dans lesquelles plusieurs émetteurs sont associés à un même dispositif saturateur.

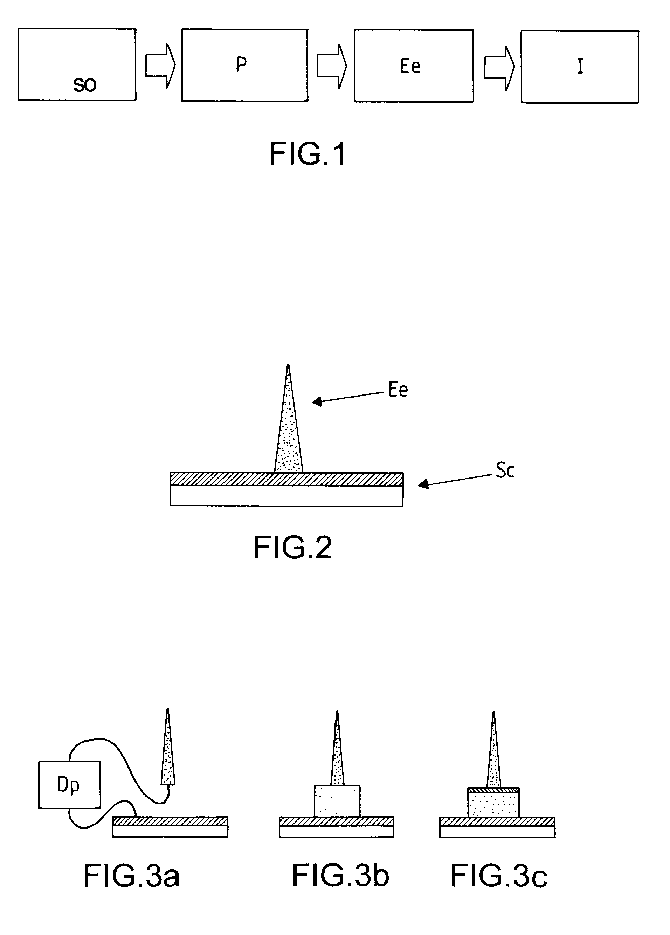

De manière générale, la cathode de l'invention fonctionne selon le schéma de la figure 1:

Grâce à une source optique SO, un élément photoconducteur P, reçoit un rayonnement qui permet d'en faire varier les propriétés de conduction électrique. Cet élément photoconducteur étant monté en série avec un élément émetteur d'électrons Ee, l'élément photosensible permet de réguler le courant émis par l'ensemble de la cathode lorsque celle-ci est plongée dans un champ électrique.

La cathode comporte au moins un élément émetteur tel que ceux décrits ci-après :

Il s'agit d'objets conducteurs de taille micrométrique et nanométrique, présentant un fort rapport entre la dimension de leur sommet et leur hauteur. Ils doivent leurs propriétés d'émission de champ à l'amplification du champ électrique existant à leur sommet du fait de leur forme (exemple sur figure 2). Il peut s'agir de micropointes semiconductrices ou métalliques par exemple de molybdène, de formes approximativement coniques, ou pyramidales, mais aussi de nanofils de métal ou de semiconducteur, de nanofibres, de nanotubes de carbone, de BN, et autres connus...

L'émetteur ou le groupe d'émetteurs tels qu'ils viennent d'être décrits sont connectés en série à un dispositif photoconducteur Dp comme illustré en figures 3a et b.

Dans le schéma de la figure 3c le dispositif photoconducteur muni d'une couche conductrice à sa partie supérieure, peut se trouver présenter des dimensions latérales élevées par rapport aux dimensions de la pointe émettrice. Dans ce cas, seulement la valeur du champ moyen E0 est modifiée lors d'un éclairement du photoconducteur, et elle l'est au maximum dans un rapport. Cette situation est donc peu favorable.

Il peut être particulièrement avantageux d'utiliser un élément photoconducteur avec sa couche conductrice supérieure de dimensions du même ordre de grandeur ou inférieure à la hauteur de la pointe émettrice

En effet, dans ce cas, la configuration des lignes de champ et des surfaces équipotentielles à proximité de l'émetteur est changée de sorte que le champ électrique au sommet de l'émetteur est très sensiblement modifié, comme explicité ci-dessous.

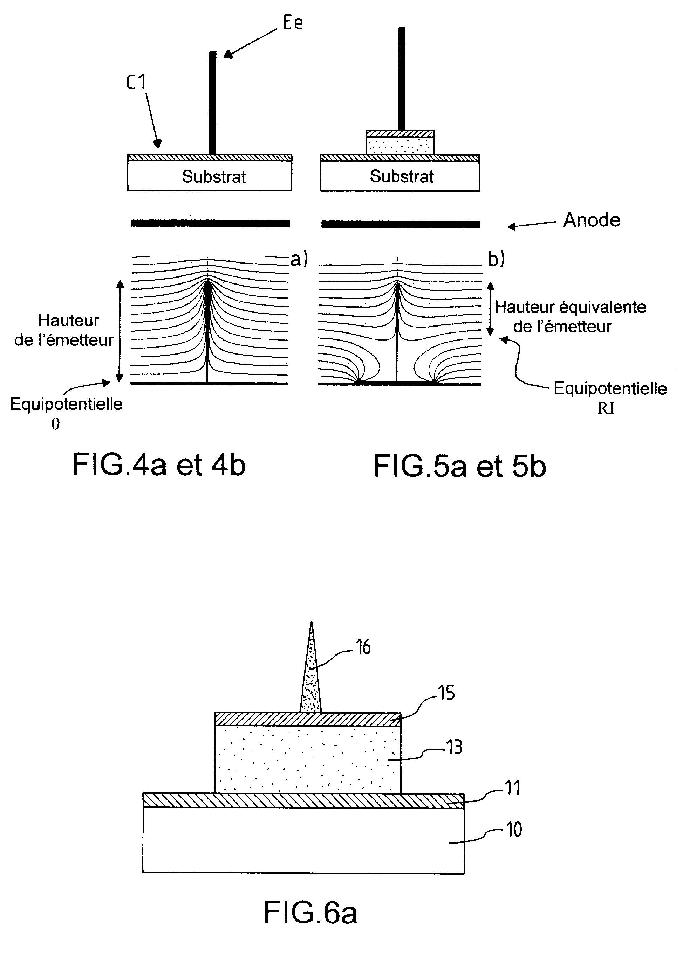

Pour mieux comprendre ces cas, il convient d'examiner le mécanisme d'amplification du champ électrique et l'effet d'une résistance série sur l'émission d'un émetteur. On peut se reporter aux figures 4a et 4b, relatives à une pointe à la surface d'un support conducteur et des surfaces équipotentielles électriques au voisinage de cette pointe. Elle est surmontée d'une électrode (grille ou anode), non représentée, servant à appliquer un champ électrique moyen $E_0 = V/d$.

A distance de l'émetteur, les équipotentielles sont régulièrement espacées. Au-dessus de l'émetteur, elles sont comprimées, traduisant une amplification $\beta$ du champ électrique $E = \beta * E_0$, liée à l'accumulation de charges au sommet. Le facteur d'amplification du champ est donné par

$$\beta \approx \frac{h}{r},$$

où h correspond à la hauteur réelle de l'émetteur, et r à son rayon.

Les figures 5a et 5b illustrent le cas d'une pointe à la surface d'un support conducteur localisé de dimensions de l'ordre de grandeur de la pointe. Plus précisément la figure 5a représente une portion de cathode à un émetteur en présence d'une résistance série individualisée, localisée sous l'émetteur, et parcourue par le courant d'émission. L'équipotentielle RI remonte rapidement au-dessus du substrat conducteur, dès qu'on s'éloigne latéralement de l'émetteur. Si l'extension latérale de la métallisation supérieure de la résistance est faible (inférieure à la hauteur de l'émetteur), la figure des équipotentielles au-dessus de l'émetteur est semblable à celle d'un émetteur plus court, comme on le voit sur la figure 5b.

On peut montrer que

$$\beta \approx \frac{h}{r} \times \left(1 - \alpha \frac{RI}{hE_0}\right)$$

où $\alpha$ est un coefficient dépendant de l'extension latérale de la résistance série.

Tout se passe donc comme si la hauteur du nanotube h, le coefficient d'amplification $\beta$, et le champ au sommet $E=\beta E_0$ avaient subi une variation relative

$$\frac{dh}{h} = \frac{d\beta}{\beta} = \frac{dE}{E} = -\alpha \frac{RI}{hE_0},$$

par rapport à une situation sans résistance série.

Le courant émis qui suit une loi essentiellement exponentielle avec le champ E au sommet de l'émetteur :

$$I = aE^2 \exp{-\frac{b}{E}},$$

est très efficacement diminué par la réduction de E.

Par exemple, avec $E_0=30V/\mu m$, une diminution de $\beta$ effectif de $\beta =230$ à $\beta =200$ (d$\beta/\beta$=15%) provoque une diminution du courant émis I d'un ordre de grandeur.

On peut remarquer que cet effet est très important pour une extension latérale limitée de la résistance : pour un diamètre de la résistance égale à la hauteur de l'émetteur, on a $\alpha = 0.88$. Si l'extension de la métallisation supérieure de la résistance est beaucoup plus grande que la hauteur de l'émetteur, l'effet disparaît, $\alpha \sim 0$. On se retrouve dans une situation où ce n'est plus $\beta$ qui est modifié, mais $E_0$, le champ moyen. Dans ce cas, la variation relative du champ au sommet de l'émetteur est

$$\frac{dE}{E} = \frac{dE_0}{E_0} = -\frac{RI}{E_0 d},$$

où d est la distance de la cathode à l'électrode supérieure.

Le rapport des dE/E entre les deux situations (extension faible ou grande de la métallisation supérieure de la résistance) est de

$$u = \alpha \frac{d}{h}.$$

On notera que l'invention est particulièrement intéressante lorsque d est supérieure à H ( hauteur des émetteurs).

C'est pourquoi, si l'on veut contrôler le courant émis, il s'avère particulièrement intéressant de coupler la pointe à un élément résistif de faible extension latérale.

Dans la présente invention, l'élément photoconducteur assure cette fonction et de plus, de manière modulée par l'éclairement.

Lorsque l'élément photoconducteur est une photorésistance, la modulation d'éclairement au cours du temps module la valeur de la résistance et donc le courant émis. Cet effet se produit comme exposé ci-dessus par l'intermédiaire de la modulation relative de la hauteur effective des nanocylindres, du coefficient d'amplification effectif et du champ effectif au sommet,

$$\frac{\Delta h}{h} = \frac{\Delta\beta}{\beta} = \frac{\Delta E}{E} \approx -\alpha \frac{\Delta(RI)}{hE_0}.$$

Lorsque le photoconducteur travaille en source de courant contrôlé par la lumière, il est le siège d'une chute de tension $\Delta V$ qui se substitue à RI dans la formule ci-dessus, et le résultat est le même :

$$\frac{\Delta h}{h} = \frac{\Delta\beta}{\beta} = \frac{\Delta E}{E} \approx -\alpha \frac{\Delta(\Delta V)}{hE_0}$$

Dans ce dernier cas, le photoconducteur impose alors son courant à l'émetteur, permettant une commande du courant émis linéaire avec la puissance optique.

D'une manière générale, un photoconducteur offre donc un moyen de moduler par la lumière le courant émis par la cathode.

Dans le cadre de l'invention, on peut substituer aux photorésistances et aux photodiodes PIN des dispositifs à gains, connus, comme photodiodes à avalanches ou phototransistors.

**Exemples de réalisation de cathodes selon l'invention :**

*1) Exemples de cathode utilisant une photorésistance en régime de mobilité*

Selon un premier exemple de réalisation de l'invention on propose d'utiliser une résistance photosensible, et on en module l'éclairement. Une telle résistance est par exemple réalisée par l'empilement de couches illustré en figure 6a réalisant la séquence suivante : à la surface d'un substrat transparent référencé 10 : un conducteur transparent 11 / un semiconducteur intrinsèque (I) ou faiblement dopé ($\nu$ ou $\pi$), référencé 13 / un conducteur transparent référencé 15, sur lequel on réalise l'émetteur en forme de pointe 16.

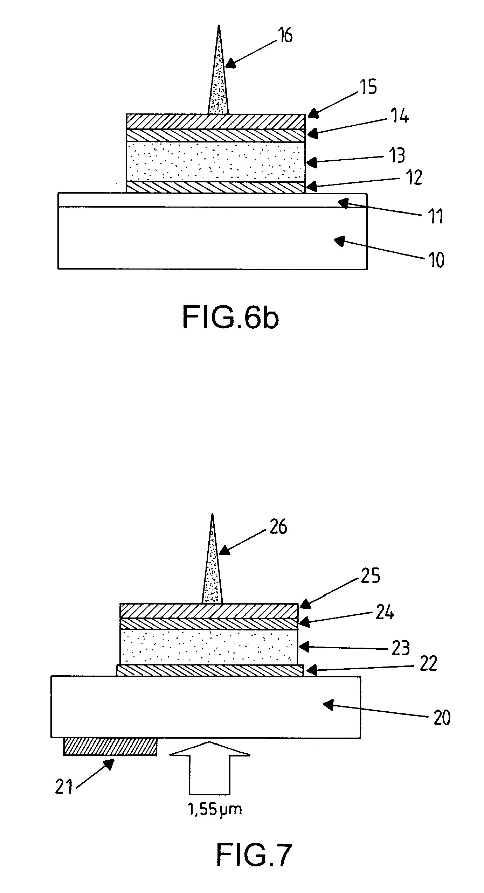

Une telle résistance peut également être par exemple réalisée par l'empilement de couches illustré en figure 6b réalisant la séquence suivante : à la surface d'un substrat transparent référencé 10 : un conducteur transparent 11 / un semiconducteur dopé n+, référencé 12 / un semiconducteur intrinsèque (I) ou faiblement dopé, référencé 13 / un semiconducteur n+, référencé 14 / un conducteur transparent référencé 15, sur lequel on réalise l'émetteur en forme de pointe 16.

Par exemple, sous l'émetteur et en partant de celui-ci, la séquence peut être TiN / Silicium dopé phosphore $10^{19}$cm-3 / Silicium non intentionnellement dopé / Silicium dopé phosphore $10^{19}$cm-3 / ITO sur un substrat de quartz préalablement muni de surfaces conductrices.

L'ensemble est soumis en face arrière ou avant à un rayonnement dans un spectre de longueurs auxquelles est absorbant le silicium, typiquement à des longueurs d'onde de l'ordre de $0,5\mu$m. Toutes les couches sont dans cet exemple délimitées latéralement (diamètres ou côtés avantageusement plus petits que la hauteur de la pointe émettrice). Cet ensemble constitue la cathode.

Selon un second exemple de réalisation illustré en figure 7, le semiconducteur I ou $\nu$ est photoconducteur et a une résistance variable selon l'éclairement par une source optique de longueur d'onde $\lambda$ ($\mu$m)<1.24/Eg (eV), où Eg est la largeur de bande interdite du semiconducteur. Il peut avoir une épaisseur de quelques centaines de nm à quelques $\mu$m. Les semiconducteurs n+ assurent un contact ohmique entre le semiconducteur intrinsèque et les couches conductrices. Leur épaisseur peut être de quelques dizaines de nm à quelques centaines de nm. Le substrat est lui-même en semiconducteur dopé et la connexion électrique avec le dispositif photoconducteur se fait également par son intermédiaire. L'onde optique de puissance dépendante du temps traverse le substrat et le conducteur transparents et est absorbée par le semiconducteur I ou $\nu$ dans lequel elle module la concentration des porteurs de charges, et donc sa résistance, et par suite le courant émis.

Pour une telle configuration, le couple InP/GaInAs est particulièrement bien adapté à une excitation à 1.55$\mu$m.

Plus précisément sur un substrat 20 de type InP dopé n transparent à la longueur d'onde d'excitation en l'occurrence à 1,55 micron, on réalise un premier contact conducteur en face dite arrière 21.

En face dite avant, côté émetteur, on réalise par épitaxie la photorésistance comportant une couche 22 de Ga $_{0,48}$In$_{0,52}$As dopé n , recouverte d'une couche 23 de Ga $_{0,48}$In$_{0,52}$As intrinsèque ou très peu dopée, recouverte elle-même d'une couche 24 de Ga $_{0,48}$In$_{0,52}$As dopée p, l'ensemble étant recouvert d'une deuxième couche métallique 25 sur laquelle se trouve l'émetteur à émission de champ ou micropointe 26. Les couches dopées, sont minces (quelques dizaines de nm) particulièrement celle du dessous, pour ne pas absorber inutilement la puissance optique qui doit moduler la résistance de la zone I. Celle-ci peut avoir une épaisseur typique de quelques centaines de nm à quelques $\mu$m.

Cette photorésistance est une diode polarisée en direct, contactée en son coté inférieur à un potentiel référencé V-, son contact supérieur se trouve à un potentiel plus élevé V+, par l'application d'une tension plus élevée sur l'électrode en regard de la cathode de sorte que des électrons et les trous peuvent être injectés dans la zone de matériau intrinsèque ou faiblement dopé. Ainsi ce ne sont pas les contacts qui dominent l'impédance de la diode, mais la résistance de la zone I modulable par la lumière.

On pourrait réaliser de la même manière que pour cet exemple de la figure 7, une photorésistance avec une structure NIN, au lieu de PIN en direct.

*2) Exemple de cathode utilisant une photorésistance en régime de saturation de vitesse des porteurs*

Lorsque l'épaisseur de la couche de matériau intrinsèque qui est le siège de la modulation des porteurs est suffisamment élevée rapportée à la tension à laquelle il est soumis, on peut réguler la résistance de cette couche. Ceci n'est plus le cas lorsque le matériau photosensible est soumis à un champ supérieur à quelques $10^3$ à $10^4$ V/cm, il ne fonctionne plus en régime de mobilité, mais en régime de saturation de vitesse des porteurs. Dans ce cas, ce n'est plus la résistance qui est modulée, mais on fonctionne en source de courant contrôlée par l'éclairement. Le courant émis s'ajuste à la valeur de la source de courant qui joue le rôle de consigne. Cette situation peut être avantageuse comparée à la précédente.

Ainsi, la résistance montée en série avec l'émetteur de courant peut typiquement être une diode PIN polarisée en direct ou une séquence NIN, composée d'un empilement de couches semiconductrices avec une couche intermédiaire, dans lequel on peut photogénérer des porteurs de charge permettant d'en faire varier la résistance.

Selon l'art antérieur, on est typiquement dans un régime de mobilité de porteurs d'électrons tant que l'ensemble n'est pas soumis à une tension trop élevée.

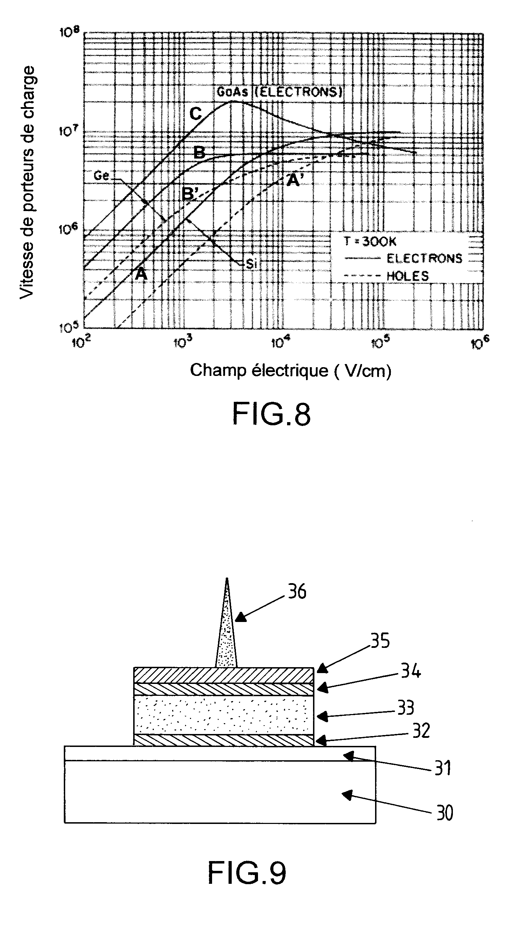

La figure 8 illustre un tel comportement représentant la vitesse de porteurs de charges ( les traits pleins sont relatifs aux électrons, les traits pointillés sont relatifs aux trous) en fonction de la tension appliquée et ce pour différents matériaux. Sur ces courbes, il apparaît un premier régime, dans lequel la vitesse des porteurs varie continûment, puis au-delà d'une certaine valeur de champ, cette vitesse atteint un pallier, le courant correspondant atteint un courant dit de saturation $(I = I_{sat} = SJ_{sat}$ avec S la surface).

Ce phénomène est notamment décrit dans les publications_de C. Jacoboni, C. Canali, G. Ottaviani, and A. A. Quaranta, "A review of some charge transport properties of silicon", Solid State Electron., 20, 77 (1977) et de P. Smith, M. Inoue, and J. Frey, "Electron velocity in Si and GaAs at very high electric fields", Appl. Phys. Lett., 37, 797 (1980).

En effet, la densité de courant est donnée par $J = nev$ où n est la concentration de porteurs, e la charge de l'électron et v la vitesse des porteurs. Pour des champs électriques faibles, la vitesse des porteurs est proportionnelle au champ et on a $v = \mu E$ où $E$ est le champ électrique et $\mu$ la mobilité. On est en régime de mobilité (loi d'ohm). Pour des champs électriques plus élevés, on observe une saturation de la vitesse des porteurs et dans ce cas $J = J_{sat} = nev_{sat}$. La densité de courant ne dépend ainsi plus du champ appliqué, et le courant émis varie linéairement avec l'éclairement de la structure.

Pour le silicium, on voit sur la figure 8 que pour des champs supérieurs à $10^4 V.cm^{-1}$, on passe dans ce régime de saturation.

**3) Exemples de cathode utilisant une photodiode PIN ou MIN en inverse**

On peut aussi utiliser à la place du photoconducteur ci-dessus une photodiode PIN en inverse (figure 9). Pour cela seul l'ordre des couches change.

La couche 31 de contact inférieur (réalisée à la surface d'un substrat transparent 30) est à un potentiel V-, non représenté, alors que la couche 35 de contact supérieur est à potentiel V+, non représenté, de part et d'autre de la structure de type diode, l'empilement des couches 32/ 33/ 34 est comme illustré en figure 9.

Dans ce cas, on peut envisager un courant émis par la pointe 36 de 1A émis/ W de puissance optique, environ, pour les semiconducteurs dont le gap est proche de 1eV (Silicium, GaAs, GaInAs...). La réalisation est en tous points semblable aux cathodes à photorésistances. Il suffit de remplacer la couche inférieure dopée n+ par une dopée p+ (structure PIN)

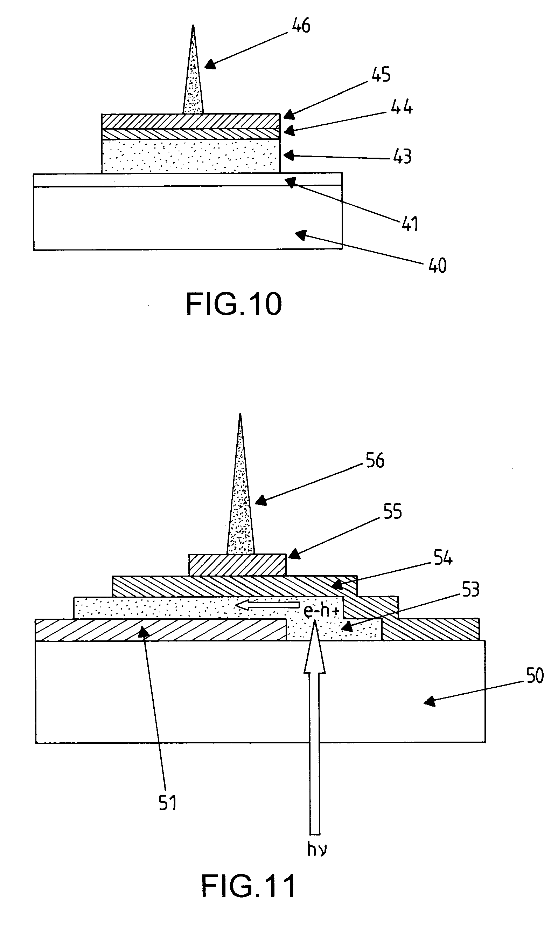

Il est aussi possible de réaliser une structure de type MIN comme illustré en figure 10, dans laquelle la couche M est illustrée par la couche 41 qui est une couche conductrice (métaux ou conducteur transparent comme l'oxyde d'indium et d'étain...).

Selon cette configuration, en l'absence d'éclairement, aucun courant ne passe. En présence d'éclairement, au maximum un électron transite par photon incident : il ne s'agit pas d'une structure à gain comme peut l'être la photorésistance.

Une variante de structure MIN est illustrée en figure 11, dans laquelle les porteurs photogénérés diffusent latéralement dans la couche 53 de matériau intrinsèque ou faiblement dopé, selon cette configuration, il est possible de supprimer la couche conductrice transparente, en la remplaçant par un contact 51, cette variante ne présente ainsi plus que l'empilement de deux couches semiconductrices ( couche 53 et couche 54), sur lequel on réalise de manière classique une couche de contact supérieur 55 et la pointe émettrice 56.

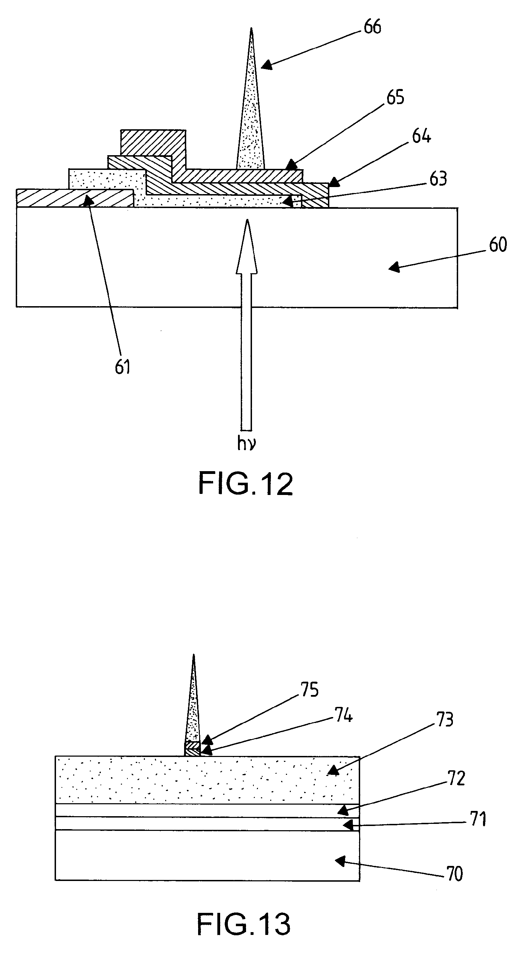

Il est possible d'améliorer la structure de type MIN ci-dessus en décalant la couche 61 comme illustré en figure 12 pour permettre un meilleur contrôle des porteurs dans la couche I, illustrée par la couche référencée 63, surplombée par les couches 64 et 65, sous la pointe 66.

Ces structures PIN ou MIN en inverse présentent l'avantage d'éviter l'injection purement électrique d'une charge d'espace de porteurs à partir des électrodes ce qui peut se produire dans certains cas dans les photorésistances.

Elles présentent un autre avantage : on peut éviter d'utiliser des moyens de limiter la durée de vie des porteurs (la disparition des porteurs peut se faire par transit vers les électrodes). L'inconvénient est l'absence de gain de photoconduction (puissance optique de commande éventuellement plus grande).

La couche conductrice supérieure de l'élément photoconducteur (couche surdopée et ou métallique) comme l'illustre la figure 13, peut avantageusement être très étroite référencé 75 avec une couche inférieure fortement dopée 74 (dimension latérale de l'ordre de la centaine de nm) ce qui permet l'obtention d'impédances en obscurité élevées utiles pour le fonctionnement à haute fréquence, et ceci sans délimitation des couches sous-jacentes. Ces couches très localisées sont disposées à la surface de la, couche de matériau pas ou peu dopé 73.

Les couches de semiconducteurs N, I, P, peuvent être également délimitées latéralement, sur toute leur épaisseur ou sur une partie seulement.

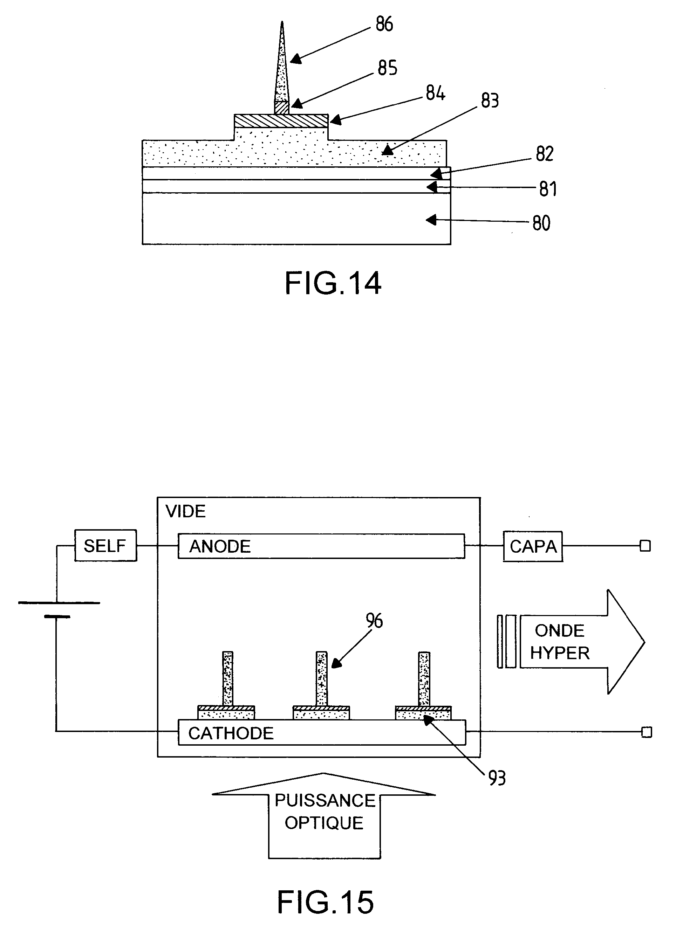

Une situation particulièrement intéressante est celle de la figure 14 où la couche n+ supérieure 84 est découpée sur toute son épaisseur et la couche I photosensible 83 est délimitée seulement sur une partie de son épaisseur. Dans cette variante, la couche de contact supérieur est très localisée 85, et supporte la pointe émettrice 86.

La partie étroite de la couche I sert à constituer une impédance élevée en absence d'éclairement, et la partie plus large ou même non délimitée de cette même couche I a une dimension assez grande, compatible en éclairement avec un bon couplage de la lumière, donc une bonne absorption, donc une création efficace de porteurs. Les porteurs photogénérés diffusent rapidement dans la partie étroite supérieure de la couche I pour y assurer la conduction.

Le semiconducteur photosensible peut être disposé dans une configuration verticale avec ses contact supérieurs et inférieurs ou dans une disposition planaire, caractérisée en ce que ces deux contacts n'ont aucun point sur la même perpendiculaire au substrat. Cette configuration peut facilité l'éclairement du semiconducteur photosensible et éviter de recourir à des conducteurs transparents moins performants en conductivité.

Le semiconducteur photosensible peut être des portions du substrat lui-même, si celui-ci est semiconducteur.

Nous allons décrire ci-après différents moyens de couplage de la lumière avec l'élément photosensible :

Les élément photosensibles peuvent être des portions du substrat lui-même ou des couches de matériaux déposés sur le substrat, du même coté que les émetteurs ou de l'autre coté.

On peut éclairer les élément photosensibles directement ou à travers le substrat si celui-ci est transparent à la longueur d'onde excitatrice.

On peut acheminer la lumière par propagation guidée dans des fibres, ou dans des guides intégrés au substrat, ou en propagation spatiale, en éclairage uniforme ou focalisé sur les éléments photosensibles eux-mêmes par le biais de réseaux de microlentilles par exemple qui peuvent être intégrées au reste de la structure,. Enfin on peut utiliser des couches anti-reflets, à l'entrée de la lumière dans la structure, ainsi que des réflecteurs de Bragg pour maximiser l'interaction de la lumière avec la couche photoconductrice.

Toutes les variantes de cathode selon l'invention qui ont été décrites peuvent être incorporées dans des tubes amplificateur.

La figure 15 illustre un premier exemple de configuration possible, de tube amplificateur comprenant une cathode selon l'invention, comportant des pointes émettrices 96 couplées à des éléments photoconducteurs 93.

Le fonctionnement est le suivant. L'onde optique qui porte le signal d'entrée module le courant émis comme décrit ci-dessus. Les paquets d'électrons accélérés par le champ continu excitent un champ électrique hyperfréquence dans la cavité. La puissance hyperfréquence provient de la puissance fournie par le générateur DC qui sert également de polarisation pour l'émission des électrons.

On peut voir aussi le fonctionnement du dispositif amplificateur comme celui d'un oscillateur dont l'amplitude des oscillations est contrôlé par un dispositif photosensible commandée par la lumière. Ce type d'amplificateur est entièrement nouveau.

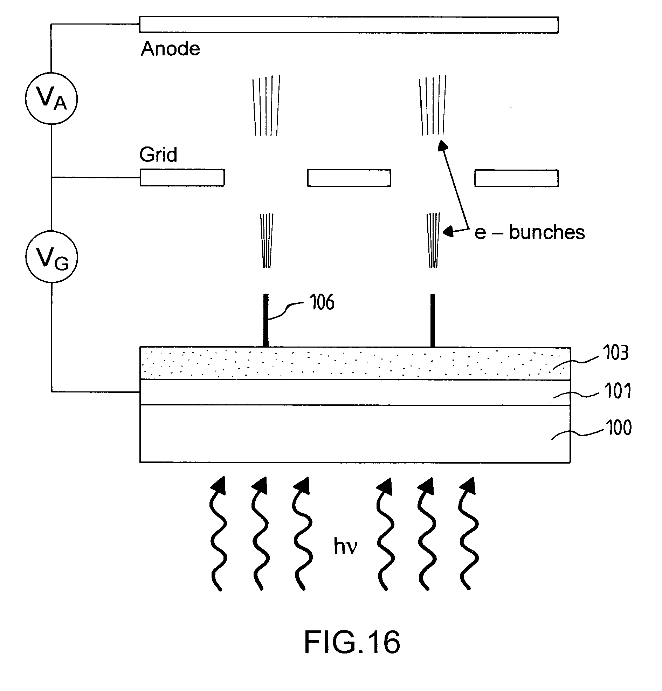

La figure 16 illustre un second exemple de configuration possible comprenant une grille intermédiaire. Il s'agit d'un dispositif similaire à celui illustré en figure 15 et comportant en outre une grille intermédiaire, pour permettre un contrôle indépendant de la polarisation DC de l'émission et de la polarisation DC de l'amplification et un isolement des cavités cathode-grille et grille-anode et éviter ainsi d'osciller. Ici, le champ hyper est faible dans la cavité cathode grille donc ne modifie pas sensiblement le champ $E_0$ auquel est soumis l'émetteur 106 couplé à un élément photoconducteur 103 à la surface d'un substrat 100 recouvert d'une couche conductrice transparente 101, et donc il n'y a pas d'oscillations dans cette cavité cathode-grille. L'amplification a lieu de manière classique dans la cavité grille-anode, comme dans une triode à commande électrique.

Ce tube peut présenter l'avantage d'être à relativement large bande, ne nécessitant pas obligatoirement une cavité.

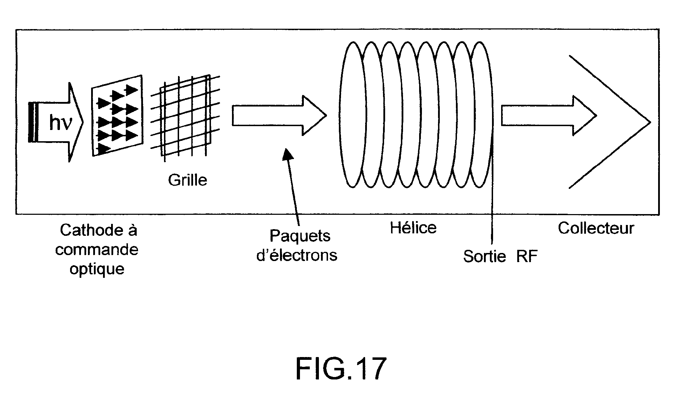

La figure 17 illustre un troisième exemple de tube amplificateur, à hélice.

Il comporte une cathode à commande optique de l'un des types décrits ci-dessus, associé à une grille. L'émission des électrons est modulée par cet ensemble. Les paquets d'électrons sont ensuite accélérés et transfèrent leur énergie au champ hyperfréquence qui se crée dans l'hélice. Ce transfert est large bande. Grâce à la commande optique, la modulation de l'émission est également large bande, car ne nécessitant pas de cavité. Ce dispositif présente en outre l'avantage que grâce à la caractéristique non linéaire de l'émission par émission de champ, les électrons émis peuvent être regroupés en paquets relativement monocinétiques, ce qui favorise la récupération d'énergie dans le collecteur.

De manière générale, la présente invention apporte les avantages suivants :

le parallélisme de la commande optique permet de commander tous les émetteurs en phase, autorisant ainsi des transconductances supérieures pour les amplificateurs utilisant ces cathodes

- L'isolation galvanique inhérente à la commande optique permet de s'affranchir des isolants et de conserver des performances à haute fréquence.
- la suppression des guides d'entrée électriques simplifie la connectique et permet une miniaturisation plus grande notamment des triodes.
- La suppression de la grille dans certaines configurations de tubes amplificateurs entraîne une simplification de fabrication, la suppression des problèmes de rigidité de grille, et des problèmes de transparence de grille
- La commande optique se prête à la commande à distance.
- Sur certains types de tubes, la possibilité de « gate » optique sur un dispositif à commande électrique peut conduire à une conception simplifiée.

- Enfin, d'une manière générale, l'invention autorise des tubes compacts et large bande.

## Revendications

**1.** Cathode à émission de champ à commande optique, comprenant un substrat (10, 20, 30, 40, 50, 60, 70, 80) muni d'au moins une surface conductrice ( 11, 21, 31, 41, 51, 61, 71, 81) et au moins un élément émetteur conducteur (16, 26, 36, 46, 56, 66, 76, 86) à proximité de la ou les surfaces conductrices comprenant

- en outre au moins un élément photoconducteur (13, 23, 33, 43, 53, 63, 73, 83) électriquement connecté en série entre le ou les éléments émetteurs et la ou les surfaces conductrices du substrat, chaque élément émetteur présentant un fort rapport entre la dimension de son sommet et sa hauteur et le ou les éléments photoconducteurs étant munis à leurs surfaces supérieures d'au moins une couche conductrice (15, 25, 35, 45, 55, 65, 75, 85) et **caractérisée en ce que**

- la ou les couches conductrices de la face supérieure de le ou les éléments photoconducteurs sont scindées en zones isolées les unes des autres, chaque zone est associée à un élément émetteur, et les dimensions latérales de chaque zone sont comprises entre le diamètre et la hauteur de l'élément émetteur.

**2.** Cathode à émission de champ à commande optique selon la revendication 1, **caractérisée en ce que** le ou les éléments émetteurs, le ou les éléments photoconducteurs et la ou les surfaces conductrices du substrat sont empilés dans cet ordre dans une structure intégrée sur le substrat.

**3.** Cathode à émission de champ à commande optique selon les revendications 1 ou 2, **caractérisée en ce que** le ou les éléments émetteurs sont de forme sensiblement conique ou pyramidale de base inférieure ou égale à la hauteur, en semiconducteur ou en métal.

**4.** Cathode à émission de champ à commande optique selon l'une des revendications 1 ou 2, **caractérisée en ce que** le ou les éléments émetteurs sont de type nanofils ou nanofibres ou nanotubes de hauteur plus grande que le diamètre, en carbone ou en nitrure de bore ou en métal.

**5.** Cathode à émission de champ à commande optique selon l'une des revendications 1 à 4, **caractérisée en ce que** le ou les éléments photoconducteurs sont une photorésistance, pouvant fonctionner également en photosource de courant

**6.** Cathode à émission de champ à commande optique selon la revendication 1 à 4, **caractérisée en ce que** le ou les éléments photoconducteurs sont une photodiode de type PIN, P étant représentatif d'une couche de matériau semiconducteur dopée p+, I étant représentatif d'une couche de matériau semiconducteur pas ou peu dopé, N étant représentatif d'une couche de matériau semiconducteur dopé n+, ou de type MIN, M étant représentatif d'une couche à conduction métallique, les couches P ou M se trouvant en contact électrique avec la ou les surfaces conductrices du substrat de sorte que la photodiode se trouve polarisée en inverse lors de l'utilisation normale de la cathode.

**7.** Cathode à émission de champ à commande optique selon la revendication 6, caractérisée en ce les matériaux semiconducteurs sont de type silicium ou de type matériaux III-V pouvant être à base de GaAs, InP ou d'alliages des deux.

**8.** Tube amplificateur à commande optique comportant un générateur connecté à une anode et à une cathode, **caractérisée en ce que** la cathode est selon l'une des revendications 1 à 7.

**9.** Tube amplificateur à commande optique selon la revendication 8, **caractérisé en ce qu'**il comprend en outre une grille intermédiaire connectée à l'anode et à la cathode.

**10.** Tube amplificateur selon l'une des revendications 8 ou 9, **caractérisé en ce qu'**il comprend une hélice placée entre la cathode et l'anode.

## Patentansprüche

**1.** Optisch gesteuerte Feldemissionskathode, die ein mit wenigstens einer leitenden Fläche (11, 21, 31, 41, 51, 61, 71, 81) ausgestattetes Substrat (10, 20, 30, 40, 50, 60, 70, 80) und wenigstens ein leitendes Emissionselement (16, 26, 36, 46, 56, 66, 76, 86) in der Nähe der ein oder mehreren leitenden Flächen umfasst,

- die ferner wenigstens ein fotoleitfähiges Element (13, 23, 33, 43, 53, 63, 73, 83) umfasst, das elektrisch in Serie zwischen dem oder den Emissionselement(en) und der oder den leitenden Fläche(n) des Substrats geschaltet ist,

wobei jedes Emissionselement eine starke Beziehung zwischen der Abmessung ihrer Spitze und ihrer Höhe aufweist und das oder die fotoleitfähige(n) Element(e) an seinen/ihren oberen Flächen mit wenigstens einer leitenden Schicht (15, 25, 35, 45, 55, 65, 75, 85) ausgestattet sind, und **dadurch gekennzeichnet, dass**

- die ein oder mehreren leitenden Schicht(en) der oberen Fläche des oder der fotoleitenden Elements/e in voneinander isolierte Zonen unterteilt ist/sind, wobei jede Zone mit einem Emissionselement assoziiert ist, und wobei die seitlichen Abmessungen jeder Zone zwischen dem Durchmesser und der Höhe des Emissionselements enthalten sind.

2. Optisch gesteuerte Feldemissionskathode nach Anspruch 1, **dadurch gekennzeichnet, dass** das oder die Emissionselement(e), das oder die fotoleitenden Element(e) und die ein oder mehreren leitenden Flächen des Substrats in dieser Reihenfolge in einer integrierten Struktur auf dem Substrat gestapelt sind.

3. Optisch gesteuerte Feldemissionskathode nach Anspruch 1 oder 2, **dadurch gekennzeichnet, dass** das oder die Emissionselement(e) eine im Wesentlichen konische oder pyramidische Form mit einer Basis, die gleich oder kleiner als die Höhe ist, hat/haben und aus einem Halbleiter-Material oder Metall hergestellt ist/sind.

4. Optisch gesteuerte Feldemissionskathode nach Anspruch 1 oder 2, **dadurch gekennzeichnet, dass** das oder die Emissionselement(e) vom Nanofaden- oder Nanofasern- oder Nanoröhrentyp mit einer Höhe, die größer ist als der Durchmesser, aus Kohlenstoff oder aus Bornitrid oder aus Metall ist/sind.

5. Optisch gesteuerte Feldemissionskathode nach einem der Ansprüche 1 bis 4, **dadurch gekennzeichnet, dass** das oder die fotoleitenden Element(e) ein Fotowiderstand ist/sind, der auch als Stromfotoquelle dienen kann.

6. Optisch gesteuerte Feldemissionskathode nach einem der Ansprüche 1 bis 4, **dadurch gekennzeichnet, dass** das oder die fotoleitenden Element(e) eine Fotodiode des PIN-Typs ist/sind, wobei P eine mit p+ dotierte Halbleitermaterialschicht repräsentiert, wobei I eine nicht oder schwach dotierte Halbleitermaterialschicht repräsentiert, wobei N eine mit n+ dotierte Halbleitermaterialschicht repräsentiert, oder des MIN-Typs, wobei M eine metallische Leiterschicht repräsentiert, die Schichten P oder M sich in elektrischem Kontakt mit den ein oder mehreren leitenden Flächen des Substrats befinden, so dass die Fotodiode bei normalem Gebrauch der Kathode umgekehrt polarisiert wird.

7. Optisch gesteuerte Feldemissionskathode nach Anspruch 6, **dadurch gekennzeichnet, dass** die Halbleitermaterialien vom Siliciumtyp oder Materialien des Typs III-V sind, die auf GaAs, InP oder Legierungen der beiden basieren können.

8. Optisch gesteuerte Verstärkerröhre, die einen Generator umfasst, der mit einer Anode und einer Kathode verbunden ist, **dadurch gekennzeichnet, dass** die Kathode einem der Ansprüche 1 bis 7 entspricht.

9. Optisch gesteuerte Verstärkerröhre nach Anspruch 8, **dadurch gekennzeichnet, dass** sie ferner ein mit der Anode und der Kathode verbundenes Zwischengitter umfasst.

10. Verstärkerröhre nach Anspruch 8 oder 9, **dadurch gekennzeichnet, dass** sie einen zwischen der Kathode und der Anode platzierten Helix umfasst.

## Claims

1. An optically controlled field emission cathode, comprising a substrate (10, 20, 30, 40, 50, 60, 70, 80) having at least one conducting surface (11, 21, 31, 41, 51, 61, 71, 81) and at least one conductive emitter element (16, 26, 36, 46, 56, 66, 76, 86) in the vicinity of the conducting surface(s),

- further comprising at least one photoconductive element (13, 23, 33, 43, 53, 63, 73, 83) electrically connected in series between the emitter element(s) and the conducting surface(s) of said substrate,

each emitter element having a strong relationship between the dimension of its peak and its height, and the photoconductive element(s) being provided on their upper surface(s) with at least one conducting layer (15, 25, 35, 45, 55, 65, 75, 85), and **characterised in that**

- the conducting layer(s) of the upper face of the photoconductive element(s) is/are split into zones that are isolated from each other, with each zone being associated with an emitter element and the lateral dimensions of each zone being between the diameter and the height of the emitter element.

2. The optically controlled field emission cathode according to claim 1, **characterised in that** said emitter element(s), said photoconductive element(s) and said conducting surface(s) of said substrate is/are stacked in this order within an integrated structure on said substrate.

3. The optically controlled field emission cathode according to claim 1 or 2, **characterised in that** the emitter element(s) is/are of substantially conical or pyramid shape with a base that is less than or equal to the height and are made of a semi-conductor material or metal.

4. The optically controlled field emission cathode according to claim 1 or 2, **characterised in that** the emitter element(s) is/are of the nanowire or nanofibre or nanotube type with a height that is greater than the diameter and are made of carbon or boron nitrate or metal.

5. The optically controlled field emission cathode according to any one of claims 1 to 4, **characterised in that** the photoconductive element(s) is/are a photoresistor that is also capable of operating as a current photo source.

6. The optically controlled field emission cathode according to any one of claims 1 to 4, **characterised in that** the photoconductive element(s) is/are a photodiode of the PIN type, with P representing a layer of p+ doped semiconductor material, I representing a layer of non-doped or lightly doped semiconductor material, N representing a layer of n+ doped semiconductor material, or of the MIN type, with M representing a layer with metal conduction, with the layers P or M being found in electrical contact with the conducting surface(s) of said substrate so that said photodiode is reverse-biased during normal use of the cathode.

7. The optically controlled field emission cathode according to claim 6, **characterised in that** the semiconductor materials are of the silicon type or of the III-V materials type that can be based on GaAs, InP or on alloys of both.

8. An optically controlled amplifying tube, comprising a generator connected to an anode and a cathode, **characterised in that** said cathode is a cathode according to any one of claims 1 to 7.

9. The optically controlled amplifying tube according to claim 8, **characterised in that** it further comprises an intermediate grid connected to said anode and to said cathode.

10. The amplifying tube according to claim 8 or 9, **characterised in that** it comprises a helix placed between said cathode and said anode.

FIG.1

FIG.2

FIG.3a          FIG.3b          FIG.3c

FIG.4a et 4b        FIG.5a et 5b

FIG.6a

FIG.6b

1,55μm

FIG.7

FIG.8

FIG.9

46

45

44

43

41

40

## FIG.10

56

55

54

53

e-h+

50

51

hy

## FIG.11

66

65

64

63

60

61

hν

FIG.12

75

74

73

72

71

70

FIG.13

FIG.14

FIG.15

FIG.16

hν

Grille

Cathode à
commande
optique

Paquets
d'électrons

Hélice

Sortie RF

Collecteur

FIG.17

## RÉFÉRENCES CITÉES DANS LA DESCRIPTION

**Littérature non-brevet citée dans la description**

- **C. JACOBONI ; C. CANALI ; G. OTTAVIANI ; A. A. QUARANTA.** A review of some charge transport properties of silicon. *Solid State Electron.,* 1977, vol. 20, 77

- **P. SMITH ; M. INOUE ; J. FREY.** Electron velocity in Si and GaAs at very high electric fields. *Appl. Phys. Lett.,* 1980, vol. 37, 797